# FASCICULE DE BREVET EUROPEEN

(11) **EP 0 524 063 B1**
(45) Date de publication et mention de la délivrance du brevet: **28.02.1996**
(21) Numéro de dépôt: 92401982.1
(22) Date de dépôt: 09.07.1992
(51) Int. Cl.: G03B 42/04

(54) **Dispositif de marquage d'indications**
Indikationsmarkierungsvorrichtung
Indication marking device

(30) Priorité: 19.07.1991 FR 9109187
(43) Date de publication de la demande: 20.01.1993
(73) Titulaire: GENERAL ELECTRIC CGR S.A., F-92130 Issy les Moulineaux (FR)
(72) Inventeur: Fajac, Claude, Cabinet BALLOT-SCHMIT, F-75116 Paris (FR); Ohnet-Lombal, Fabienne, Cabinet BALLOT-SCHMIT, F-75116 Paris (FR)
(74) Mandataire: Schmit, Christian Norbert Marie

(56) Documents cités:
- US-A- 4 127 774
- US-A- 4 426 723

## Description

L'invention a pour objet un dispositif de marquage d'indications sur des clichés radiographiques, notamment des clichés de mammographie. Elle a pour but de faciliter la reconnaissance de la provenance d'un cliché de mammographie, au moment de sa visualisation, en superposant sur l'image radiographique présentée des indications relatives d'une part au protocole d'acquisition du cliché et, éventuellement d'autre part, à l'identité de la personne soumise à l'examen.

On connaît différents types de marquage d'indications sur des clichés radiographiques. Un des systèmes connus consiste, au moment du développement du cliché radiographique, à accéder au travers d'une chambre noire spéciale sur le cliché et à écrire au moyen d'un stylet, ou au moyen d'une machine à écrire spécifique, les indications relatives au cliché ou à la personne examinée. Ce dispositif est peu pratique d'une part parce que le matériel est coûteux. Il est difficile à mettre en oeuvre et d'autre part parce que le marquage des indications est alors fait en temps différé par rapport à la prise du cliché.

On connaît d'autres systèmes consistant pour l'essentiel à placer sur le cliché radiographique des plaquettes indicatrices comportant les indications souhaitées. Ces plaquettes possèdent des indications gravées, les gravures sont remplies de plomb. Lors de l'illumination du cliché les parties gravées masquent l'irradiation du cliché. Au moment du développement on voit apparaître la révélation des indications souhaitées. Ce système à plaquettes résout bien le problème de l'amovibilité des indications. Il est en temps réel.

Pour maintenir ces plaquettes sur les clichés au moment de la prise de vue, il a été prévu de réaliser des plaquettes aimantées. Ainsi de telles plaquettes sont rangées dans un présentoir ou râtelier métallique, et sont prélevées à la demande pour être posées sur le cliché. Cependant leur adhésion sur le cliché ne se fait pas bien parce que de plus en plus les structures des appareils de radiographie sont faites dans des matériaux non magnétiques : notamment des fibres de carbones,. Finalement les plaquettes ne tiennent pas correctement sur les clichés.

Il y a par ailleurs un autre problème à résoudre qui est celui de l'épaisseur de la plaquette. En effet, en particulier avec l'utilisation des mammographes, pour l'examen des petits seins, au moment de la compression du sein, une épaisseur maximum de 12 mm doit être atteinte. On est donc amené à devoir trouver un système de fixation qui respecte par ailleurs cette contrainte d'épaisseur maximale des plaquettes indicatrices susceptibles elles aussi d'être situées en partie sous le plateau de compression.

Dans l'invention les plaquettes sont munies de ventouses afin de fixer les plaquettes sur le cliché ; cette procédure est déjà connue dans l'art antérieur, voir par exemple US-A-4127774 et US-A-4426723. Compte-tenu du poids d'une plaquette et de l'effort de fixation qu'on désire obtenir, on est amené à réaliser des ventouses d'une certaine taille. Cette taille malheureusement excède celle tolérable en hauteur et indiquée ci-dessus. Ceci est d'autant plus vrai que, pour des raisons d'indications positives ou négatives on peut être amené à placer les plaquettes indicatrices sur une face ou sur une autre sur le cliché. Dans ce cas elles doivent être munies de ventouses des deux côtés. Dans l'invention on résout le problème d'épaisseur en plaçant, au moins d'un côté, un couple de ventouses au lieu d'une seule ventouse. On obtient par la somme des surfaces de fixation de chaque ventouse la surface nécessaire à un bon collage. Le fait d'avoir dédoublé les ventouses permet par ailleurs de faire des ventouses moins épaisses et donc de souscrire par ailleurs à la contrainte d'épaisseur.

L'invention a donc pour objet un dispositif de marquage d'indications sur des clichés radiographiques, notamment des clichés de mammographie, comportant un jeu de plaquettes indicatrices à poser sur un film radiographique avant la prise du cliché, chaque plaquette comportant, sur au moins une de ses deux faces, au moins deux ventouses collable ensemble de manière amovible sur le cliché, caractérisé en ce que toutes les ventouses sont placées sur un bord latéral de la plaquette correspondante, pour être de faible épaisseur.

L'invention sera mieux comprise à la lecture de la description qui suit et à l'examen des figures qui accompagnent. Celles-ci ne sont données qu'à titre indicatif et nullement limitatif de l'invention. Les figures montrent :
- figures 1a à 1d : des représentations, respectivement un jeu de plaquettes de marquage et d'une plaquette de marquage vue du dessus ainsi que les mêmes éléments vus de côté ;
- figure 2 : un dispositif de mammographie utilisable pour mettre en oeuvre l'invention ;
- figures 3a, 3b et 3c : des représentations détaillées respectivement en coupe, vues de dessus, et montées sur une plaquette des ventouses de l'invention ;
- figure 4 : un moule pour la fabrication des ventouses.

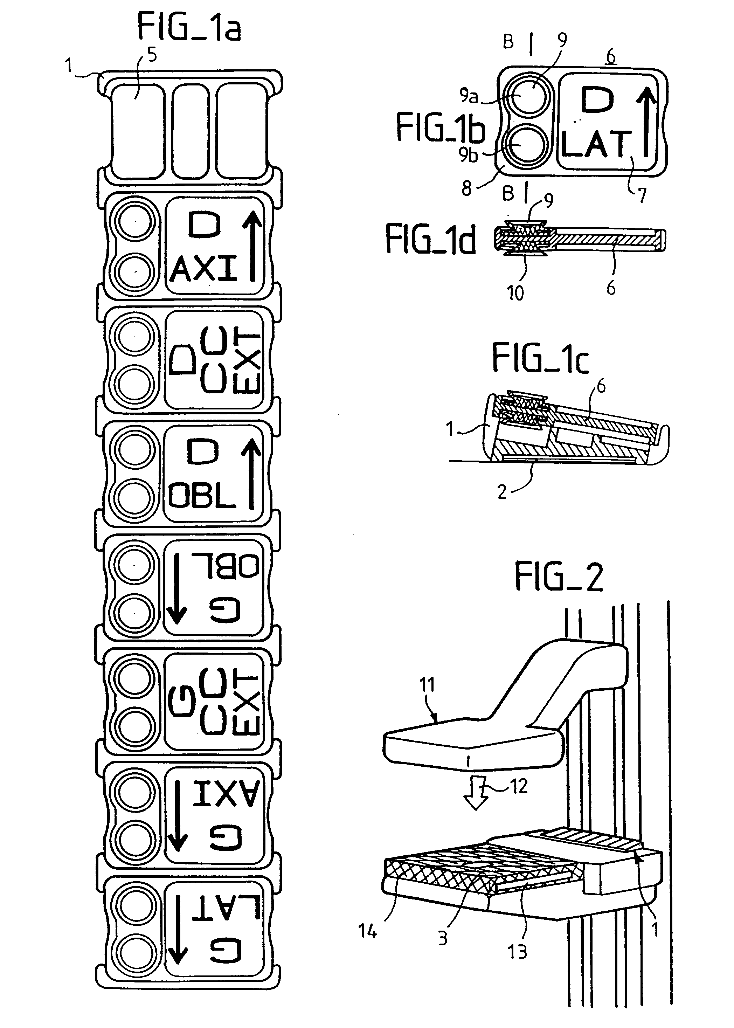

Les figures 1a à 1b montrent un dispositif de marquage d'indications selon l'invention. Celui-ci comporte un râtelier 1 muni d'une manière préférée à sa base d'une plaquette magnétique 2 pour pouvoir être posé à proximité d'un cliché 3 sur un appareil de radiographie 4 (figure 2). Le râtelier comporte des alvéoles telles que 5 susceptibles de recevoir chacune une plaquette 6 d'un jeu de plaquettes indicatrices. Ces plaquettes indicatrices de forme générale plane comportent essentiellement deux parties une première partie 7 où sont mentionnées des indications, et une deuxième partie 8 portant le dispositif de fixation avec les ventouses 9 de l'invention. Une plaquette 6 a une forme légèrement rectangulaire d'environ 5 cm de long et 3 cm de large. Le système de fixation par ventouse est placé à proximité d'un petit côté de ce rectangle. La particularité du système à ventouse de l'invention est que les ventouses sont couplées deux par deux, ventouse 9a et ventouse 9b par exemple pour conduire à une faible épaisseur du système de fixation.

La figure 1d montre la plaquette 6 munie d'un dispositif de ventouse 9 supérieur ainsi qu'un dispositif de ventouse du même type 10 orienté vers le bas. De cette façon les plaquettes 6 peuvent être posées sur une de leurs faces ou sur leur autre face sur le cliché 3 dans l'appareil de radiographie 4. L'appareil de radiographie représenté montre un mammographe dans lequel une pelote 11 peut être abaissée selon le sens de la flèche 12 pour venir comprimer un sein à radiographier au moment de la radiographie. En pratique le film n'est pas posé directement sur le plateau porte-sein mais est, au contraire, contenu dans une cassette 13 introduite dans ce plateau porte-sein 14. La partie supérieure du plateau porte-sein est en un matériau laissant passer les rayons X par exemple en fibre de carbone. La surface du plateau est lisse : elle permet l'accrochage des ventouses. Par contre, n'étant pas métallique elle n'aurait pas permis l'accrochage d'une plaque magnétique.

La figure 1b montre une plaquette 6 munie de son couple de ventouse 9 et 10. Elle peut être donc fixée sur le plateau 14 porte-sein d'un côté ou de l'autre. Les ventouses sont placées à l'extrémité parce que, au moment où la ventouse est fixée, la partie indicatrice peut être glissée sous la pelote 11 alors que la ventouse 9 éventuellement trop épaisse, resterait en deçà de l'aplomb de cette pelote.

L'invention est particulièrement adaptée à l'utilisation dans un mammographe puisque dans un tel mammographe le plateau porte-sein peut être oblique voire renversé ce qui implique que le dispositif de marquage soit fixé sur l'appareil durant les radiations.

Les plaquettes 6 comportent, sur les petits côtés du rectangle, des formes incurvées qui permettent une saisie facile.

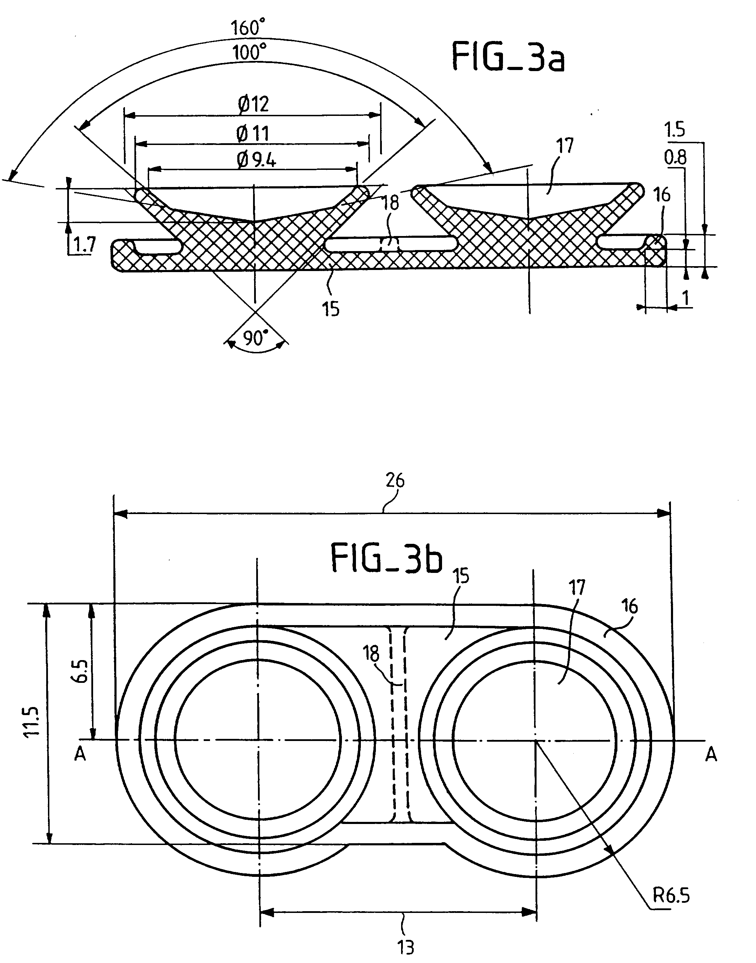

Les figures 3a et 3b montrent respectivement selon une coupe longitudinale A-A de la figure 3b, et en vue de dessus des couples de ventouse selon une réalisation particulière de l'invention. On pourrait avoir ainsi trois, voire même plus, ventouses d'un même côté de la plaquette s'il était besoin de réduire encore l'épaisseur. De même, les ventouses peuvent être indépendantes bien que pour faciliter la fabrication, on préfère les obtenir par couple. Les ventouses sont obtenues par moulage selon une technique qui sera décrite ci-après. La forme des couples de ventouse est la suivante. Les ventouses sont reliées l'une à l'autre par une base 15 dont la longueur, dans un exemple vaut 26 mm et ayant une forme de deux extrémités arrondies reliées par des segments droits. Les extrémités arrondies ont un diamètre de 13 mm. Toute la périphérie de la base 15 est munie d'une ceinture 16 présentant par rapport à la base une épaisseur renforcée. Par exemple, la base a une épaisseur de 0,8 mm alors qu'à l'endroit de la ceinture l'épaisseur est de 1,5 mm. Ceci confère une plus grande résistance à l'ensemble des ventouses : cette disposition permet de les fabriquer et de les mettre en place couple par couple sur les plaquettes. On limite de cette façon la manipulation au moment de la fabrication. Chaque ventouse, de forme circulaire possède une vasque ronde pour permettre la fixation sur le dessus du plateau porte-sein 14. Cette vasque de fixation possède un fond de forme conique dont l'ouverture angulaire est de l'ordre de 160°. Au tiers de la hauteur de la vasque l'ouverture de ce cône se resserre pour ne mesurer plus que 100°. Les diamètres des cercles de collage des ventouses sont de l'ordre de 10 mm : ils sont cotés précisément sur la figure 3a. La profondeur de la vasque est d'une manière préférée de 1,7 mm. Au besoin, on peut encore augmenter le renfort de la ceinture 16 en disposant une barre 18 de surépaisseur entre les couples de ventouse. Dans l'exemple représenté, les centres des deux ventouses sont distants de 13 mm.

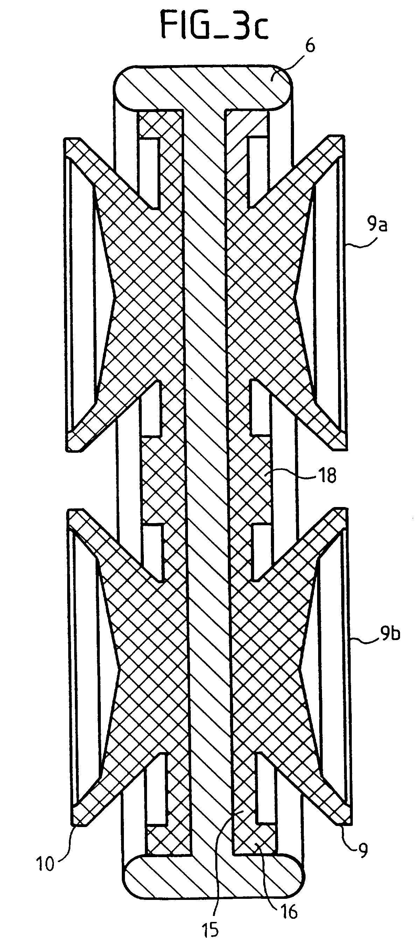

La figure 3c montre les couples de ventouse 9 et 10 selon une coupe B-B de la figure 1b. On y retrouve les mêmes éléments que dans les figures précédentes mais on remarque néanmoins que les surépaisseurs des renforts 16 et 18 sont orientées vers le côté où leur surépaisseur ne contribue pas à l'augmentation d'épaisseur de la plaquette une fois qu'elle sera mise en place. Ainsi, cette surépaisseur s'étend, en orientation, de la base 15 vers les cercles de collage des vasques 17.

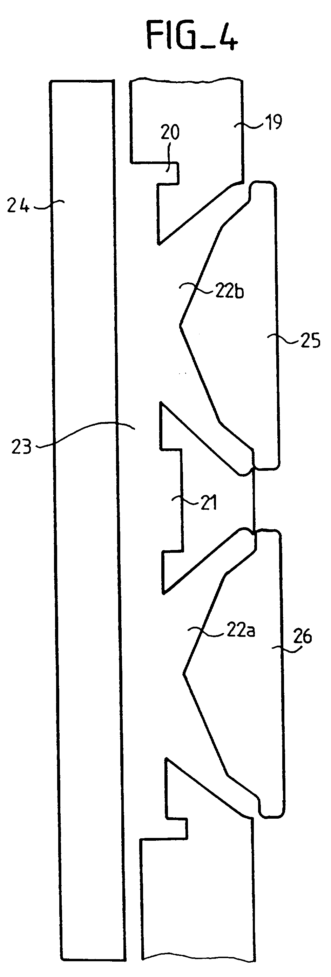

La fabrication des ventouses est menée de la façon suivante (figure 4) . On réalise un moule dans une plaque 19, par exemple une plaque d'aluminium. Le moule possède comme forme la forme que doivent avoir les ventouses une fois fabriquées. La plaque 19 possède ainsi sur une surface des rainures 20 et 21 pour permettre la réalisation des renforts 16 et 18 respectivement. Elle possède par ailleurs sur une autre face des cavités 22a et 22b de forme conique (pour y réaliser les ventouses). En couronnement des cavités 22a et 22b de la ceinture 20 et du renfort 21, on réalise sur la première face de la plaque 19 une autre cavité 23 susceptible de contenir la base 15 des ventouses. La plaque 19 est masquée sur la première face d'un côté par une plaque de fermeture 24, tandis que les cavités 22a et 22b sont bouchées temporairement, pendant la fabrication, par des bouchons tels que 26 ou 27. Les bouchons possèdent un léger jeu par rapport au diamètre extérieur des cavités 22a et 22b de manière à permettre une légère fuite d'air ou du produit à injecter au moment de l'injection.

La fabrication se passe de la manière suivante. On pose la plaque 19 au-dessus des bouchons 25 et 26 sur une table. Puis on remplit les cavités avec une pâte polymérisable. Dans un exemple cette pâte est un mélange de caoutchouc synthétique et de silicone. Une bonne pâte qui convient est par exemple la pâte RHODORSIL RTV 501 de la société RHONE POULENC. On peut aussi réaliser un mélange caoutchouc synthétique colle. Pour coller les ventouses sur leur support on peut utiliser une colle référencée 9732 de la Société 3M. Une fois que les cavités sont remplies de pâte on pose la plaque de fermeture 24 et on attend que la pâte se polymérise. Au moment de cette polymérisation l'air ou les gaz de polymérisation s'évacuent par les fuites. Au moment du démoulage on enlève la plaque 24 et les bouchons 25 et 26 et on tire les ventouses par le côté où on a enlevé la plaque 24. Les ventouses s'enlèvent toutes seules sans se déchirer.

## Revendications

1. Dispositif de marquage d'indications sur des clichés radiographiques (3), notamment des clichés de mammographie, comportant un jeu de plaquettes (6) indicatrices à poser sur un film radiographique avant la prise du cliché, chaque plaquette comportant, sur au moins une de ses deux faces, au moins deux ventouses (9a, 9b; 9; 10) collables ensemble de manière amovible sur le cliché caractérisé en ce que toutes les ventouses sont placées sur un bord latéral de la plaquette correspondante.

2. Dispositif selon la revendication 1, caractérisé en ce que les ventouses comportent une base (15) de fixation à la plaquette et une vasque (17) de fixation au cliché et, dans leur base, une ceinture (16) d'épaisseur renforcée qui s'étend de cette base vers cette vasque.

3. Dispositif selon l'une quelconque des revendications 1 à 2, caractérisé en ce qu'il comporte un râtelier (1), à base aimantée, fixable sur l'appareil de radiographie, et dans lequel sont rangées les plaquettes.

4. Dispositif selon l'une quelconque des revendications 1 à 3, caractérisé en ce que les plaquettes sont munies de ventouses (9, 10) sur chacune de leur deux faces pour permettre de projeter sur les clichés des indications à lecture directe ou renversées.

5. Dispositif selon l'une quelconque des revendications 1 à 4, caractérisé en ce que les ventouses sont associées par couple pour faciliter la fabrication et leur mise en place, et en ce que la base de fixation des ventouses comporte une barre (18) en épaisseur renforcée à l'endroit du couplage des deux ventouses l'une à l'autre.

## Patentansprüche

1. Vorrichtung zur Anbringung von Markierungen auf Röntgenaufnahmen (3), insbesondere Mammographieaufnahmen, mit einem Satz von vor der Aufnahme auf einem Röntgenfilm anzubringenden Markierungsplättchen (6), von denen jede auf wenigstens einer ihrer zwei Seiten wenigstens zwei Saugnäpfe (9a, 9b; 9; 10) aufweist, die gemeinsam abnehmbar auf den Film geklebt werden können,
dadurch **gekennzeichnet**, daß
alle Saugnäpfe an einem Rand des entsprechenden Plättchens angebracht sind.

2. Vorrichtung nach Anspruch 1,
dadurch gekennzeichnet, daß
die Saugnäpfe eine Basis (15) zur Befestigung am Plättchen und eine Schale (17) zur Befestigung am Film aufweisen, und daß an der Basis eine Umrandung (16) mit erhöhter Dicke vorhanden ist, die von der Basis in Richtung der Schale verläuft.

3. Vorrichtung nach einem der Ansprüche 1 bis 2,
dadurch gekennzeichnet, daß
sie einen Ständer (1) mit magnetischer Basis umfaßt, der am Röntgengerät befestigt werden kann, und in dem die Plättchen aufbewahrt werden.

4. Vorrichtung nach einem der Ansprüche 1 bis 3,
dadurch gekennzeichnet, daß
die Plättchen beidseitig mit Saugnäpfen (9, 10) versehen sind, um die Projektion von direkt lesbaren oder spiegelverkehrten Markierungen auf die Aufnahmen zu ermöglichen.

5. Vorrichtung nach einem der Ansprüche 1 bis 4,
dadurch gekennzeichnet, daß
die Saugnäpfe paarweise verbunden sind, um ihre Herstellung und Anbringung zu vereinfachen und daß die Befestigungsbasis der Saugnäpfe einen Steg (12) mit erhöhter Dicke am Ort der Verbindung der zwei Saugnäpfe miteinander aufweist.

## Claims

1. Device for marking references on X-ray plates (3), in particular mammography plates, comprising a set of indexing inserts (5) to be placed over an X-ray film before the picture is taken, each insert comprising, on at least one of its two faces, at least two suction cups (94, 95; 9; 10) capable of sticking together in a detachable manner on the plate, characterised in that all the suction cups are situated on a lateral edge of the corresponding insert.

2. Device according to claim 1, characterised in that the suction cups comprise a base (15) for fixing to the insert and a trough (17) for fixing to the plate and, in their base, a thickened circumferential reinforcing ridge (16) extending from the base to the trough.

3. Device according to either of claims 1 or 2, characterised in that it comprises a rack (1) with a magnetic base, which is capable of being fixed to the X-ray machine and in which the inserts are arranged in order.

4. Device according to any one of claims 1 to 3, characterised in that the inserts are equipped with suction cups (4, 10) on each of their two faces in order to make it possible to project on to the plates references to be read forwards or backwards.

5. Device according to any one of claims 1 to 4, characterised in that the suction cups are linked in pairs in order to simplify their manufacture and use, and in that the fixing base of the suction cups comprises a bar of reinforced thickness at the point where the two suction cups are linked.
